# EUROPÄISCHE PATENTANMELDUNG

(11) **EP 0 683 589 A2**
(43) Veröffentlichungstag der Anmeldung: **22.11.1995**
(21) Anmeldenummer: 95106351.0
(22) Anmeldetag: 27.04.1995
(51) Int. Cl.: H04M 3/54, H04Q 7/22

(54) **Verfahren und Anordnung zum Umleiten einer Fernsprechverbindung**

(30) Priorität: 11.05.1994 DE 4416715
(71) Anmelder: SIEMENS AKTIENGESELLSCHAFT, D-80333 München (DE)
(72) Erfinder: Lehmann, Thomas, D-44141 Dormund (DE)

(57) **Zusammenfassung**

Zum Umleiten einer Fernsprechverbindung von einer ersten Teilnehmerstation (T1, MS1) eines ersten Teilnehmers zu einem zweiten Teilnehmer, wobei dem zweiten Teilnehmer eine an einem drahtgebundenen Fernsprechnetz (PSTN) angeschlossene zweite Teilnehmerstation (T2) zugeordnet ist, ist bei der zweiten Teilnehmerstation (T2) eine mit dieser verbundene Umleiteinheit (U1, U2) vorgesehen. Mittels der Umleiteinheit (U1, U2) ist selbsttätig eine Fernsprechverbindung zu einer einem Mobilfunksystem zugehörigen Mobilstation (MS2) herstellbar, um den von der ersten Teilnehmerstation (T1, MS1) ankommenden Ruf zu dieser Mobilstation (MS2) umzuleiten. Die Umleitung zum Mobilfunknetz (PLMN) kann drahtlos oder drahtgebunden erfolgen.

## Beschreibung

Die Erfindung bezieht sich auf ein Verfahren und eine Anordnung zum Umleiten einer Fernsprechverbindung. Die Erfindung eignet sich insbesondere für die Umleitung eines über das drahtgebundene Fernsprechnetz ankommenden Rufs zu einer Teilnehmerstation eines Mobilfunknetzes.

Es ist allgemein bekannt, einen bei einer an einem drahtgebundenen Fernsprechnetz angeschlossenen Teilnehmerstation ankommenden Ruf zu einer anderen am drahtgebundenen Fernsprechnetz angeschlossenen Teilnehmerstation umzuleiten. Üblicherweise wird hierzu an einer Teilnehmerstation die Rufnummer derjenigen Teilnehmerstation eingegeben, zu der die Verbindung umgeleitet werden soll. Die Umleitung kann auch bei an einer Nebenstellenanlage angeschlossenen Fernsprechstationen durchgeführt werden. Weiterhin ist es allgemein bekannt, einen bei einer Mobilstation eines Mobilfunknetzes ankommenden Ruf zu einer Teilnehmerstation des drahtgebundenen Fernsprechnetzes umzuleiten. Beispielsweise kann ein Teilnehmer, solange er nicht unterwegs ist, die an seiner Mobilstation ankommenden Rufe zur am drahtgebundenen Fernsprechnetz angeschlossenen Teilnehmerstation in seinem Büro umleiten.

Der umgekehrte Weg, nämlich einen bei einer Teilnehmerstation des drahtgebundenen Fernsprechnetzes ankommenden Ruf zu einer Mobilstation umzuleiten, ist nicht vorgesehen. Einer der Gründe hierfür ist, daß in diesem Fall die verhältnismäßig hohen Gebühren für die Teilnahme am Mobilfunksystem für den anrufenden Teilnehmer anfallen könnten. Diese Gebühren sind beispielsweise dann unerwartet hoch, wenn der anrufende Teilnehmer beabsichtigt, ein Ortsgespräch zu führen und beim angerufenen Teilnehmer dieses Ortsgespräch dann in das Mobilfunksystem umgeleitet wird.

Der Erfindung liegt die Aufgabe zugrunde, ein Verfahren und eine Anordnung zum Umleiten von Fernsprechverbindungen anzugeben, die ohne Eingriff in das Fernsprechnetz und in das Mobilfunksystem realisierbar sind und bei deren Verwendung für den anrufenden Teilnehmer keine zusätzlichen Kosten entstehen.

Erfindungsgemäß wird die Aufgabe bei dem Verfahren und der Anordnung der eingangs genannten Art durch die im Patentanspruch 1 bzw. 11 angegebenen Merkmale gelöst.

Das Verfahren und die Anordnung gemäß der Erfindung haben den Vorteil, daß sie auf einfache Weise von einem Teilnehmer installierbar sind. Die Anordnung kann an üblichen, beispielsweise unter der Bezeichnung TAE bekannten Anschlußdosen für Teilnehmerstationen angesteckt werden, und sie erfordert einen verhältnismäßig geringen Aufwand, so daß sie kostengünstig hergestellt werden kann.

Ausführungsbeispiele der Erfindung werden im folgenden anhand von Zeichnungen näher erläutert. Es zeigen
- Fig. 1: eine Durchführung einer ersten Ausführungsform der Erfindung, bei der eine drahtlose Verbindung zu einem Mobilfunknetz herstellt wird,
- Fig. 2: ein Bockschaltbild einer ersten Ausführungsform einer Umleiteinheit,
- Fig. 3: eine Durchführung einer zweiten Ausführungsform der Erfindung, bei der die Verbindung zum Mobilfunknetz drahtgebunden erfolgt, und
- Fig. 4: ein Blockschaltbild einer zweiten Ausführungsform der Umleiteinheit.

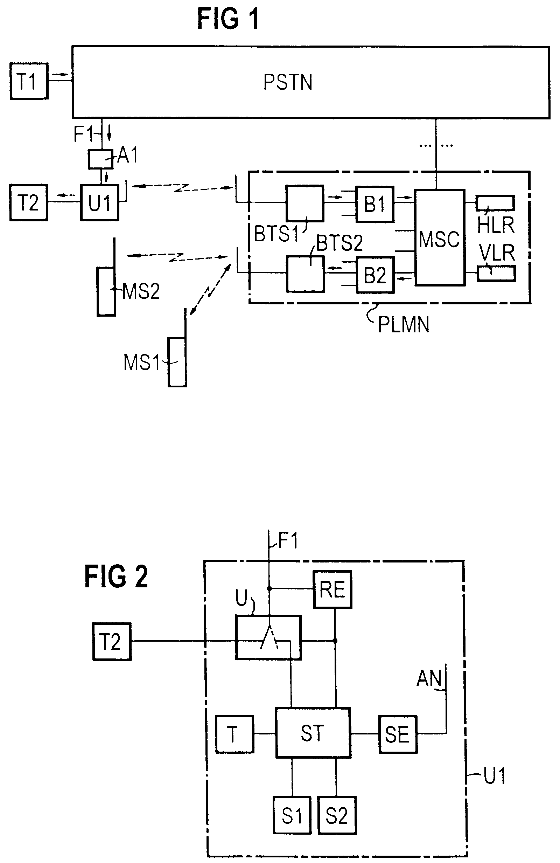

Bei der Darstellung in Fig. 1 wird davon ausgegangen, daß ein erster Teilnehmer mittels einer an einem drahtgebundenen Fernsprechnetz (Public Switched Telephone Network) PSTN angeschlossenen Teilnehmerstation T1 Informationen zu einer ebenfalls am Fernsprechnetz PSTN angeschlossenen Teilnehmer T2 eines zweiten Teilnehmers übertragen will. Die Informationen können beispielsweise ein Gespräch, Daten oder ein Faksimile sein. Der Ruf von der Teilnehmerstation T1 gelangt in bekannter Weise über das Fernsprechnetz PSTN und über die Fernsprechleitung F1 zur Anschlußeinheit A1 des zweiten Teilnehmers. Diese Anschlußeinheit A1 ist beispielsweise wie die bekannte TAE-Dose ausgebildet. Normalerweise ist an der Anschlußeinheit A1 die Teilnehmerstation T2 direkt angeschlossen. Im vorliegenden Fall ist sie jedoch über eine Umleiteinheit U1 angeschlossen. Die Umleiteinheit U1 enthält einen Umschalter, der die Fernsprechleitung F1 wahlweise mit der Teilnehmerstation T2 oder mit einer in der Umleiteinheit U1 vorgesehenen Steuereinheit verbindet. Wenn der Teilnehmer an der Teilnehmerstation T2 zu erreichen ist, ist diese über den Umschalter und die Anschlußeinheit A1 mit der Fernsprechleitung F1 verbunden. Falls der Teilnehmer jedoch unterwegs ist und über seine Mobilstation MS2 zu erreichen ist, gelangt der Ruf zur Steuereinheit in der Umleiteinheit U1. Diese stellt selbsttätig eine Verbindung zum Mobilfunknetz (Public Land Mobile Network) PLMN her und erreicht über dieses Mobilfunknetz PLMN die Mobilstation MS2.

Das Mobilfunksystem ist beispielsweise auf der Basis eines elektronischen Vermittlungssystems entsprechend dem bekannten digitalen zellularen paneuropäischen Mobilfunksystem GSM (Global System for Mobile Communication) ausgebildet. Es enthält ein Vermittlungssystem, das aus einer Mehrzahl von an dem Fernsprechnetz PSTN angeschlossenen Vermittlungsstellen MSC gebildet wird. An jeder Vermittlungsstelle MSC ist ein Funksystem angeschlossen, das aus mehreren Basisstationssteuerungen B und an diesen angeschlossenen Basisfunkstationen BTS gebildet wird, wovon in Fig. 1 nur die Basisstationssteuerungen B1 und B2 bzw. die Basisfunkstationen BTS 1 und BTS 2 dargestellt sind. An der Vermittlungsstelle MSC sind neben einem nicht dargestellten Bedien- und Wartungssystem und neben einem nicht dargestellten Geräteidentifizierungsregister eine Heimatdatei HLR und eine Besucherdatei VLR angeschlossen. In der Heimatdatei HLR sind die Daten von dort registrierten Mobilstationen gespeichert, und die Besucherdatei VLR enthält die Informationen über diejenigen Mobilstationen, die sich gerade in der jeweiligen Besucherdateifläche befinden. Ein derartiges Mobilfunksystem ist beispielsweise in einer Broschüre "D900 Mobile Communication System" SYD der Siemens AG beschrieben.

Die Umleiteinheit U1 enthält neben dem Umschalter und der Steuereinheit die wesentlichen Baueinheiten einer Mobilstation, wie beispielsweise eine mit einer Antenne verbundene Sende-/Empfangseinheit und die für die Gebührenabrechnung erforderlichen Einheiten, da die Umleiteinheit U1 gegenüber dem Mobilfunksystem PLMN wie eine Mobilstation auftritt.

Bei einem von der Teilnehmerstation T1 über die Fernleitung F1 ankommenden Ruf stellt die Umleiteinheit U1, entweder sofort oder beispielsweise nach dem dritten Läuten, an der Teilnehmerstation T2 selbsttätig eine Verbindung zum Mobilfunknetz PLMN her. Beim Einschalten der Umleiteinheit U1 hat sich diese wie eine Mobilstation im Mobilfunksystem eingebucht, und ihre Daten sind in der Heimatdatei HLR gespeichert. Bei dem ankommenden Ruf stellt eine automatische Wähleinrichtung in der Steuereinheit ST über die Basisfunkstation BTS1 und die Basisstationssteuerung B1 eine Verbindung zur Vermittlungsstelle MSC her. Diese stellt fest, wo sich die Mobilstation MS2 gerade aufhält. Falls sie sich in dem Funkbereich aufhält, für den die Vermittlungsstelle MSC zuständig ist, leitet sie den Ruf über die Basisstationssteuerung B2 und die Basisfunkstation BTS2 zur Mobilstation MS2 weiter und stellt die Fernsprechverbindung her. Falls sich die Mobilstation MS2 im Funkbereich einer anderen Vermittlungsstelle aufhält, stellt die Vermittlungsstelle MSC über das Fernsprechnetz PSTN eine Verbindung zu dieser Vermittlungsstelle und über eine entsprechende Basisstationsteuerung und eine entsprechende Basisfunkstation zur Mobilstation MS2 her.

In ganz entsprechender Weise wird ein Ruf des ersten Teilnehmers umgeleitet, wenn dieser nicht von der Teilnehmerstation T1, sondern von einer dem ersten Teilnehmer zugeordneten Mobilstation MS1 ausgeht und über das Fernsprechnetz PSTN zur Teilnehmerstation T2 gelangt.

Da der Verbindungsaufbau über das Mobilfunksystem PLMN eine gewisse Zeit erfordert, kann in der Zwischenzeit an die Teilnehmerstation T1 ein in der Umleiteinheit U1 gespeicherter Text, der dem dortigen Teilnehmer mitteilt, daß der gewünschte Teilnehmer über das Mobilfunksystem gerufen wird oder Pausenmusik gesendet werden.

Bei der in Fig. 2 dargestellten Umleiteinheit U1 ist an der Fernsprechleitung F1 der Umschalter U angeschlossen, der die Fernsprechleitung F1 entweder mit der Teilnehmerstation T2 oder mit der Steuereinheit ST verbindet. Der Umschalter U wird durch eine Ruferkennungseinheit RE gesteuert, die, ähnlich wie bei einem Anrufbeantworter, beispielsweise nach dem dritten Läuten den Umschalter U in die gestrichelt dargestellte Position bringt und dann die Fernleitung F1 mit der Steuereinheit ST verbindet. Die Steuereinheit ST enthält eine automatische Wähleinrichtung, die in bekannter Weise ausgebildet ist. Sie stellt im vorliegenden Fall über eine Sende/Empfangseinrichtung SE und eine Antenne AN eine Verbindung zur entsprechenden Basisfunkstation BTS1 her.

Die Rufnummer der Mobilstation MS2 ist in einem Speicher S1 gespeichert und kann entweder fest installiert sein oder, bei einer möglichen Umleitung zu unterschiedlichen Mobilstationen, mittels einer Tastatur T eingegeben werden. Mittels der Tastatur T kann auch eingegeben werden, ob die Verbindung zur Mobilstation MS2 sofort nach dem Eintreffen eines Rufs über die Fernsprechleitung F1 erfolgen soll oder erst nach einer bestimmten Anzahl von Rufsignalen.

Da, wie bereits erwähnt, der Verbindungsaufbau im Mobilfunksystem eine gewisse Zeit erfordert, kann zwischenzeitlich ein in einem Speicher S2 gespeicherter Text oder Pausenmusik zur Teilnehmerstation T1 übertragen werden.

Gegenüber dem Mobilfunknetz PLMN stellt die Umleiteinheit U1 eine Mobilstation dar, und somit erfolgt auch die Gebührenabrechnung, wie bei einer üblichen Mobilstation zu Lasten des Inhabers der Umleiteinheit U1 und nicht zu Lasten des über die Teilnehmerstation T1 anrufenden Teilnehmers. Außer der gegebenenfalls vorhandenen zeitlichen Verzögerung beim Verbindungsaufbau und dem gegebenenfalls übertragenen entsprechenden Text ist es für den rufenden Teilnehmer unerheblich, ob der Ruf bei der Teilnehmerstation T2 oder der Mobilstation MS2 ankommt. Seitens des gerufenen Teilnehmers ist es jedoch vorteilhaft, daß er immer unter einer einzigen Telefonnummer zu erreichen ist, was insbesondere im geschäftlichen Verkehr von Bedeutung ist.

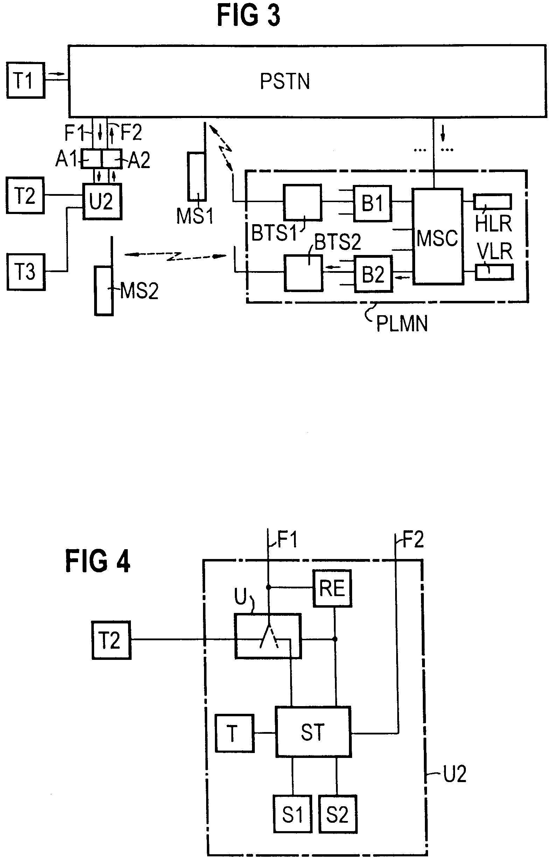

Bei der Darstellung in Fig. 3 erfolgt die Umleitung des von der Teilnehmerstation T1 bzw. MS1 ankommenden Rufs zur Mobilstation MS2 unter Verwendung des Fernsprechnetzes PSTN. Hierzu ist beim Teilnehmer T2 zusätzlich eine an einer zweiten Fernsprechleitung F2 angeschlossene Anschlußeinheit A2 vorgesehen. Diese ist beispielsweise ebenfalls wie die bekannte TAE-Dose ausgebildet. Wenn ein Ruf von der Teilnehmerstation T1 über die Fernsprechleitung F1 zur Umleiteinheit U2 gelangt und der Teilnehmer den Ruf an der Teilnehmerstation T2 nicht entgegennimmt, erfolgt in der Umleiteinheit U2 über die Fernsprechleitung F2 ein Verbindungsaufbau zur Mobilstation MS2. Der Verbindungsaufbau erfolgt wie bei einem üblichen Ruf von einem am drahtgebundenen Fernsprechnetz PSTN angeschlossene Teilnehmer zu einer Mobilstation. Nach dem Wählen der Rufnummer der Mobilstation MS2 wird über das Fernsprechnetz PSTN eine Verbindung zur entsprechenden Vermittlungsstelle MSC des Mobilfunknetzes PLMN hergestellt, und der Ruf wird in der oben beschriebenen Weise zur Mobilstation MS2 weitergeleitet. Wenn der gerufene Teilnehmer über die Mobilstation MS2 erreichbar ist, wird in der Umleiteinheit U2 die Verbindung zwischen den beiden Fernsprechleitungen F1 und F2 hergestellt, so daß der Teilnehmer der Mobilstation MS2 den Ruf von der Teilnehmerstation T1 über die Umleiteinheit U2 entgegennehmen kann.

Die in Fig. 3 dargestellte Umleiteinheit U2 unterscheidet sich von der in Fig. 2 dargestellten Umleiteinheit U1 im wesentlichen dadurch, daß die für die Verbindung zum Mobilfunknetz PLMN erforderlichen Baueinheiten durch die für eine Verbindung zum Fernsprechnetz PSTN erforderlichen Baueinheiten ersetzt sind. Gegenüber dem Fernsprechnetz PSTN stellt sich die Umleiteinheit U2 wie eine übliche Teilnehmerstation mit einer automatischen Wähleinrichtung dar. Auch hier kann während des Verbindungsaufbaus zur Mobilstation MS2 ein im Speicher S2 gespeicherter Text oder Pausenmusik zur Teilnehmerstation T1 übertragen werden. Weiterhin kann ebenfalls mittels der Tastatur T die Rufnummer der gewünschten Mobilstation MS2 in den Speicher S1 eingegeben werden. Darüber hinaus ist es möglich, mit dieser Umleiteinheit U2 auch eine beliebige Rufnummer eines am drahtgebundenen Fernsprechnetz PSTN angeschlossenen Teilnehmers einzugeben.

Die Umleiteinheiten U1 und U2 können auch Teile von Nebenstellenanlagen sein, an denen weitere Teilnehmerstationen direkt angeschlossen sind. Beispielsweise kann dann mittels einer an der Umleiteinheit U2 angeschlossenen weiteren Teilnehmerstation T3 die Mobilstation MS2 gerufen werden.

## Patentansprüche

1. Verfahren zum Umleiten einer Fernsprechverbindung von einer ersten Teilnehmerstation (T1, MS1) eines ersten Teilnehmers zu einem zweiten Teilnehmer, wobei dem zweiten Teilnehmer eine an einem drahtgebundenen Fernsprechnetz (PSTN) angeschlossene Teilnehmerstation (T2) zugeordnet ist,
**dadurch gekennzeichnet,**
daß die Fernsprechverbindung von der ersten Teilnehmerstation (T1, MS1) über eine am Fernsprechnetz (PSTN) angeschlossene, mit der zweiten Teilnehmerstation (T2) verbundene Umleiteinheit (U1, U2) zu einer einem Mobilfunknetz (PLMN) zugeordneten Mobilstation (MS2) umgeleitet wird.

2. Verfahren nach Anspruch 1,
**dadurch gekennzeichnet,**
daß die Umleitung der Fernsprechverbindung von der Umleiteinheit (U1) drahtlos zum Mobilfunknetz (PLMN) und über dieses zur Mobilstation (MS2) erfolgt.

3. Verfahren nach Anspruch 1,
**dadurch gekennzeichnet,**
daß die Umleitung der Fernsprechverbindung von der Umleiteinheit (U2) über das drahtgebundene Fernsprechnetz (PSTN) zum Mobilfunknetz (PLMN) und über dieses zur Mobilstation (MS2) erfolgt.

4. Verfahren nach einem der vorangehenden Ansprüche,
**dadurch gekennzeichnet,**
daß das Mobilfunknetz (PLMN) als Teil des an sich bekannten GSM-Mobilfunksystems ausgebildet ist.

5. Verfahren nach einem der vorangehenden Ansprüche,
**dadurch gekennzeichnet,**
daß die Umleiteinheit (U1, U2) als Teil einer Nebenstellenanlage ausgebildet ist.

6. Verfahren nach einem der vorangehenden Ansprüche,
**dadurch gekennzeichnet,**
daß die Umleiteinheit (U1, U2) nach einer vorgegebenen Anzahl von Rufsignalen selbsttätig die Verbindung zur Mobilstation (MS2) veranlaßt.

7. Verfahren nach einem der Ansprüche 1 bis 5,
**dadurch gekennzeichnet,**
daß die Umleiteinheit (U1, U2) bei einem ankommenden Rufsignal sofort selbsttätig die Verbindung zur Mobilstation (MS2) veranlaßt.

8. Verfahren nach einem der vorangehenden Ansprüche,
**dadurch gekennzeichnet,**
daß die Umleiteinheit (U1, U2) die Verbindung zu einer Mobilstation (MS2) herstellt, deren Rufnummer in einem ersten Speicher (S1) speicherbar ist.

9. Verfahren nach Anspruch 8,
**dadurch gekennzeichnet,**
daß die Rufnummer mittels einer Tastatur (T) in den ersten Speicher (S1) eingebbar ist.

10. Verfahren nach einem der vorangehenden Ansprüche,
**dadurch gekennzeichnet,**
daß die Umleiteinheit (U1, U2) während des Herstellens der Verbindung zur Mobilstation (MS2) in einem zweiten Speicher (S2) gespeicherte Information zum anrufenden Teilnehmer (T1) überträgt.

11. Anordnung zum Umleiten einer Fernsprechverbindung von einer ersten Teilnehmerstation (T1, MS1) eines ersten Teilnehmers zu einem zweiten Teilnehmer, wobei dem zweiten Teilnehmer eine an einem drahtgebundenen Fernsprechnetz (PSTN) angeschlossene Teilnehmerstation (T2) zugeordnet ist,
**dadurch gekennzeichnet,**
daß eine am Fernsprechnetz (PSTN) angeschlossene, mit der zweiten Teilnehmerstation (T2) verbundene Umleiteinheit (U1, U2) vorgesehen ist, die eine Fernsprechverbindung von der ersten Teilnehmerstation (T1, MS1) zur zweiten Teilnehmerstation (T2) zu einer vorgegebenen Mobilstation (MS2) eines Mobilfunknetzes (PLMN) umleitet.

12. Anordnung nach Anspruch 11,
**dadurch gekennzeichnet,**
daß die Umleiteinheit (U1) eine drahtlose Verbindung zum Mobilfunknetz (PLMN) herstellt.

13. Anordnung nach Anspruch 11,
**dadurch gekennzeichnet,**
daß die Umleiteinheit (U2) eine Verbindung zum Mobilfunknetz (PLMN) über das drahtgebundene Fernsprechnetz (PSTN) herstellt.

14. Anordnung nach einem der Ansprüche 11 bis 13,
**dadurch gekennzeichnet,**
daß das Mobilfunknetz (PLMN) als Teil des an sich bekannten GSM-Mobilfunksystems ausgebildet ist.

15. Anordnung nach einem der Ansprüche 11 bis 14,
**dadurch gekennzeichnet,**
daß die Umleiteinheit (U1, U2) als Teil einer Nebenstellenanlage ausgebildet ist.

16. Anordnung nach einem der Ansprüche 11 bis 15,
**dadurch gekennzeichnet,**
daß die Umleiteinheit (U1, U2) eine Ruferkennungseinheit (RE) enthält, die nach einer vorgegebenen Anzahl von Rufsignalen selbsttätig die Verbindung zur Mobilstation (MS2) veranlaßt.

17. Anordnung nach einem der Ansprüche 11 bis 15,
**dadurch gekennzeichnet,**
daß die Umleiteinheit (U1, U2) eine Ruferkennungseinheit (RE) enthält, die unmittelbar nach dem Empfang eines Rufsignals selbsttätig die Verbindung zur Mobilstation (MS2) veranlaßt.

18. Anordnung nach einem der Ansprüche 11 bis 17,
**dadurch gekennzeichnet,**
daß die Umleiteinheit (U1, U2) über eine Anschlußeinheit (A1, A2), die als eine an sich bekannte TAE-Dose ausgebildet ist, an der Fernsprechleitung (F1, F2) angeschlossen ist.

19. Anordnung nach einem der Ansprüche 11 bis 18,
**dadurch gekennzeichnet,**
daß die Umleiteinheit (U1, U2) einen ersten Speicher (S1) enthält, in dem die Rufnummer der zu rufenden Mobilstation(MS2) gespeichert ist.

20. Anordnung nach Anspruch 19,
**dadurch gekennzeichnet,**
daß die Umleiteinheit (U1, U2) eine Tastatur (T) enthält, mitttels der die Rufnummer der zu rufenden Mobilstation(MS2) in den ersten Speicher (S1) einspeicherbar ist.

21. Anordnung nach einem der Ansprüche 11 bis 20,
**dadurch gekennzeichnet,**
daß die Umleiteinheit (U1, U2) einen zweiten Speicher (S2) enthält, in dem Information gespeichert ist, die während des Herstellens der Verbindung zur Mobilstation (MS2) zum anrufenden Teilnehmer (T1) übertragbar ist.
